# EUROPEAN PATENT SPECIFICATION

(11) **EP 4 503 020 B1**
(45) Date of publication and mention of the grant of the patent: **15.07.2026**
(21) Application number: 23829803.8
(22) Date of filing: 23.05.2023
(51) Int. Cl.: G10L 15/22, G10L 15/26, G06F 3/16, G10L 15/18

(54) **SPEECH CONTROL METHOD, MULTIMEDIA SYSTEM, VEHICLE, AND STORAGE MEDIUM**
SPRACHSTEUERUNGSVERFAHREN, MULTIMEDIASYSTEM, FAHRZEUG UND SPEICHERMEDIUM
PROCÉDÉ DE COMMANDE VOCALE, SYSTÈME MULTIMÉDIA, VÉHICULE ET SUPPORT DE STOCKAGE

(30) Priority: 30.06.2022 CN 202210759453
(43) Date of publication of application: 05.02.2025
(73) Proprietor: BYD Company Limited, Shenzhen, Guangdong 518118 (CN)
(72) Inventor: YAN, Hang, Shenzhen, Guangdong 518118 (CN); YANG, Dongsheng, Shenzhen, Guangdong 518118 (CN); ZHANG, Biying, Shenzhen, Guangdong 518118 (CN); LIU, Ke, Shenzhen, Guangdong 518118 (CN)
(74) Representative: Taor, Simon Edward William
(86) International application number: PCT/CN2023/095840
(87) International publication number: WO 2024/001618

(56) References cited:
- EP-B1- 3 494 574
- CN-A- 104 916 287
- CN-A- 106 201 427
- CN-A- 106 886 430
- CN-A- 108 305 626
- CN-A- 111 897 601
- CN-A- 111 968 640
- CN-A- 114 594 923
- US-A1- 2014 278 419
- US-A1- 2015 331 666
- US-A1- 2017 301 348
- US-A1- 2021 065 716
- US-A1- 2021 158 814
- US-A1- 2022 050 708

## Description

### CROSS-REFERENCE TO RELATED APPLICATIONS

The present disclosure claims priority to Chinese Patent Application No. 202210759453.7, filed on June 30, 2022.

### FIELD

The present disclosure relates to the field of voice processing technologies, and in particular, to a voice control method, a multimedia system, a vehicle, and a storage medium.

### BACKGROUND

With rapid development of Internet and vehicle technologies, a user can use an in-vehicle multimedia system to surf online. Multiple applications (for example, KuGou and Kuwo) of a same type are installed on an existing in-vehicle multimedia system. When the user generates a voice instruction, the system directly invokes a default application to respond, and the default application is not an application preferred by the user, so that user experience is poor.

US2021/065716A1 discloses an electronic device and method. The electronic device includes a network interface and processor. The processor implements the method, including receiving a voice input through a network interface as transmitted from a first external device, including a request to execute a function using at least one application which is not indicated in the voice input, extracting a first text from the voice input by executing automatic speech recognition (ASR), when the at least one application is identified based on the first text, transmitting, through the network interface to the first external device, second data associated with the identified at least one application for display by the first external device, and when the at least one application is not identified based at least in part on the first text, reattempting identification of the at least one application by executing natural language understanding (NLU) on the first text.

EP3494574B1 discloses example techniques to identify a voice service to process a voice input. An example implementation may involve an NMD receiving, via a microphone, voice data indicating a voice input. The NMD may identify, from among multiple voice services registered to a media playback system, a voice service to process the voice input and cause, via a network interface, the identified voice service to process the voice input.

US2021/158814A1 discloses dynamic interfacing with applications. For example, a system receives a first input audio signal. The system processes, via a natural language processing technique, the first input audio signal to identify an application. The system activates the application for execution on the client computing device. The application declares a function the application is configured to perform. The system modifies the natural language processing technique responsive to the function declared by the application. The system receives a second input audio signal. The system processes, via the modified natural language processing technique, the second input audio signal to detect one or more parameters. The system determines that the one or more parameters are compatible for input into an input field of the application. The system generates an action data structure for the application. The system inputs the action data structure into the application, which executes the action data structure.

### SUMMARY

Embodiments of the present disclosure provide a voice control method, a multimedia system, a vehicle, and a storage medium, to resolve a problem that voice control response cannot be performed by using an application preferred by a user.

The invention is set out in the appended claims.

According to the voice control method, the multimedia system, the vehicle, and the storage medium, when a semantic parsing result matches a preset keyword, a user preference can be intuitively reflected. Therefore, an application corresponding to the preset keyword may be used to respond to a target voice instruction. This helps improve user experience, and further improve a user retention rate. When a semantic parsing result does not match a preset keyword, a recommended application is determined from an application list corresponding to a target service type, and the recommended application is used to respond to a target voice instruction. This can meet a user preference to a certain extent, improve user experience, and further improve a user retention rate.

### BRIEF DESCRIPTION OF THE DRAWINGS

To describe technical solutions in embodiments of the present disclosure more clearly, the following briefly describes accompanying drawings required for describing the embodiments of the present disclosure. Clearly, the accompanying drawings in the following descriptions show only some embodiments of the present disclosure, and a person of ordinary skill in the art may still derive other drawings from these accompanying drawings without creative efforts.
FIG. 1 is a schematic diagram of an application environment of a voice control method according to an embodiment of the present disclosure;
FIG. 2 is a flowchart of a voice control method according to an embodiment of the present disclosure;
FIG. 3 is another flowchart of a voice control method according to an embodiment of the present disclosure;
FIG. 4 is another flowchart of a voice control method according to an embodiment of the present disclosure;
FIG. 5 is another flowchart of a voice control method according to an embodiment of the present disclosure;
FIG. 6 is another flowchart of a voice control method according to an embodiment of the present disclosure;
FIG. 7 is another flowchart of a voice control method according to an embodiment of the present disclosure;
FIG. 8 is another flowchart of a voice control method according to an embodiment of the present disclosure;
FIG. 9 is another flowchart of a voice control method according to an embodiment of the present disclosure;
FIG. 10 is another flowchart of a voice control method according to an embodiment of the present disclosure; and

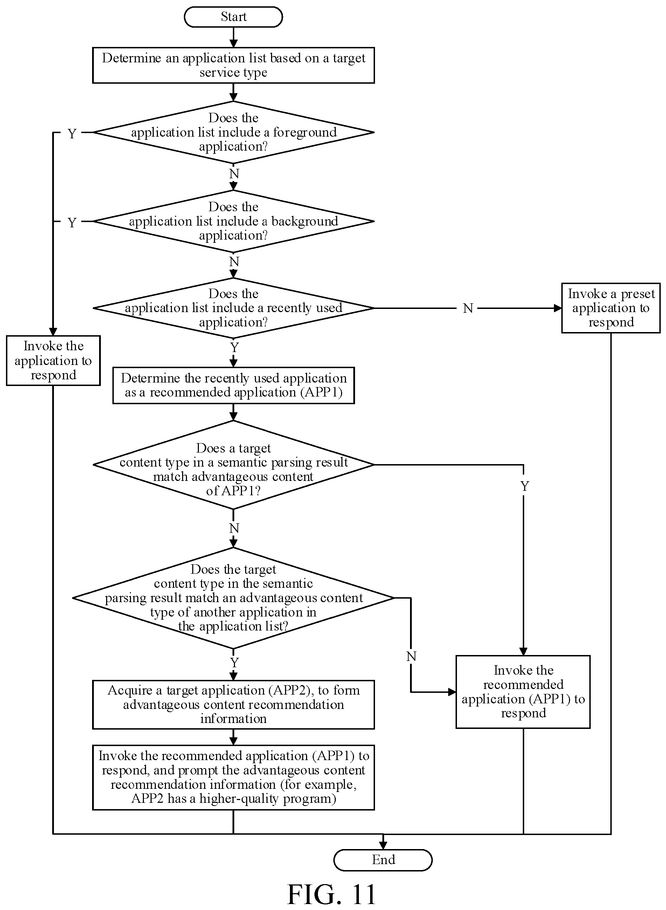

FIG. 11 is another flowchart of a voice control method according to an embodiment of the present disclosure.

### DETAILED DESCRIPTION

The following clearly describes technical solutions in embodiments of the present disclosure with reference to accompanying drawings in the embodiments of the present disclosure. Clearly, the described embodiments are some of the embodiments of the present disclosure rather than all of the embodiments. All other embodiments acquired by a person of ordinary skill in the art based on the embodiments of the present disclosure without creative efforts shall fall within the protection scope of the present disclosure.

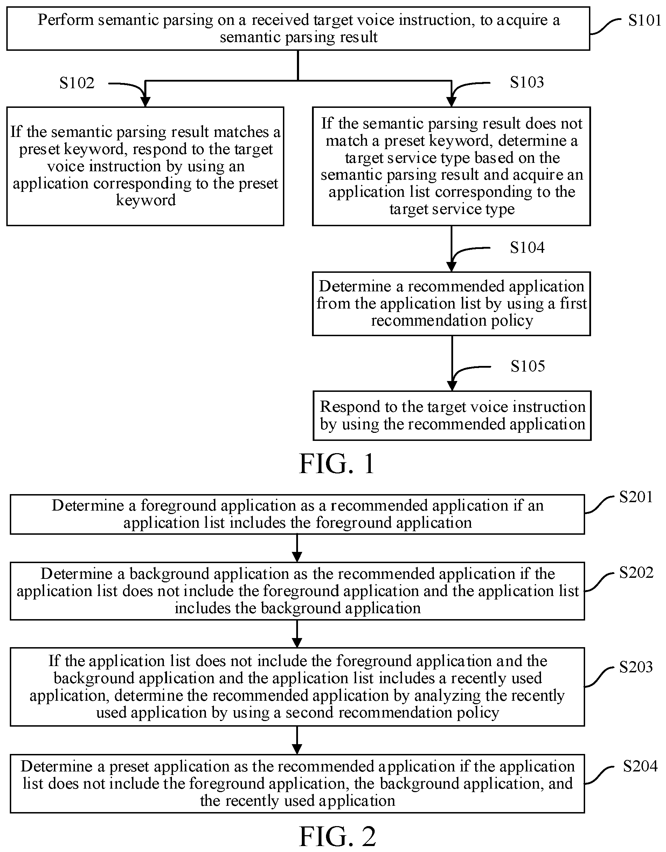

The embodiments of the present disclosure provide a voice control method. The voice control method may be applied to an application environment shown in FIG. 1. Specifically, the voice control method is applied to a voice control system (briefly referred to as a "system" below). The voice control system may be a multimedia system on a vehicle (that is, an in-vehicle infotainment system), or may be another system that can implement voice control. The voice control system may invoke an application that meets a user preference to respond based on a collected target voice instruction input by a user, to improve user experience.

In an embodiment, a voice control method is provided. As shown in FIG. 1, the voice control method includes the following steps.

S101: Semantic parsing is performed on a received target voice instruction, to acquire a semantic parsing result.

S102: If the semantic parsing result matches a preset keyword, the target voice instruction is responded to by using an application corresponding to the preset keyword.

S103: If the semantic parsing result does not match a preset keyword, a target service type is determined based on the semantic parsing result and an application list corresponding to the target service type is acquired.

S104: A recommended application is determined from the application list by using a first recommendation policy.

S105: The target voice instruction is responded to by using the recommended application.

The target voice instruction is an instruction that is input by a user in a voice manner and that indicates a specific application to work. The semantic parsing result is a result of semantic parsing performed on the target voice instruction.

In an example, in step S101, a multimedia system may receive the target voice instruction input by the user; and invoke a preset voice recognition tool of the system to perform semantic parsing on the target voice instruction, to acquire the semantic parsing result. A processing process of the target voice instruction includes a voice recognition process and a semantic parsing process. The voice recognition tool may be any tool for implementing semantic parsing, including but not limited to an iFLYTEK voice recognition tool. For example, the multimedia system may receive a target voice instruction, for example, "play crosstalk", "I want to hear financial news", "I want to hear ghost stories", "pop music", or "play a movie", input by the user in a voice form, and perform semantic parsing on the target voice instruction to acquire a semantic parsing result in a text form.

The preset keyword is a preset keyword bound to a specific application.

In an example, in step S102, after acquiring the semantic parsing result, the multimedia system may perform matching on the semantic parsing result and the preset keyword. When the semantic parsing result matches the preset keyword, the application corresponding to the preset keyword may be directly used to respond to the target voice instruction. For example, if the multimedia system acquires a semantic parsing result "I want to open Tencent Video", and the semantic parsing result matches a preset keyword "Tencent Video" preset in the system, the multimedia system responds to the target voice instruction by using an application "Tencent Video APP". Because a user preference can be intuitively reflected when the semantic parsing result matches the preset keyword, directly using the application corresponding to the preset keyword to respond to the target voice instruction meets the user preference, improves user experience, and further improves a user retention rate.

The target service type is a corresponding service type, in the semantic parsing result, that reflects a function to which an utterance of the user belongs. The application list is a list formed by at least one candidate application. The candidate application is an application that can display content corresponding to the target service type.

**In** an example, in step S103, after acquiring the semantic parsing result, the multimedia system may perform matching on the semantic parsing result and the preset keyword. When the semantic parsing result does not match the preset keyword, the multimedia system may determine the target service type based on the semantic parsing result, then query, based on the target service type, the at least one candidate application including the target service type in the system, and acquire the application list based on the at least one candidate application. In this example, the multimedia system acquires, from the semantic parsing result, field information corresponding to a service type field, and determines the field information as the target service type. For example, the semantic parsing result acquired through parsing by using the voice recognition tool includes field information corresponding to a service field, and the field information corresponding to the service field is determined as the target service type. The service field is used to reflect the service type corresponding to the function to which the utterance of the user belongs, including but not limited to "air conditioner=Aircontrol", "navigation=Map", "music =Music", and "radio station=internetRadio".

The first recommendation policy is a preset policy used to determine a recommended application based on a service type. The recommended application is an application recommended for use by the user.

In an example, in step S104, after determining the application list corresponding to the target service type based on the target service type, the multimedia system may invoke the preset first recommendation policy to select an application that best complies with a user preference from the application list, and determine the application as the recommended application. In this example, the first recommendation policy may be used to analyze the user preference based on user behavior or other information, to determine a processing policy of the recommended application that matches the user preference.

In an example, in step S105, after determining the recommended application, the multimedia system responds to the target voice instruction by using the recommended application, for example, may play audio based on the recommended application. It may be understood that, because the recommended application meets the user preference to a certain extent, using the recommended application to respond to the target voice instruction can improve user experience, and further improve a user retention rate.

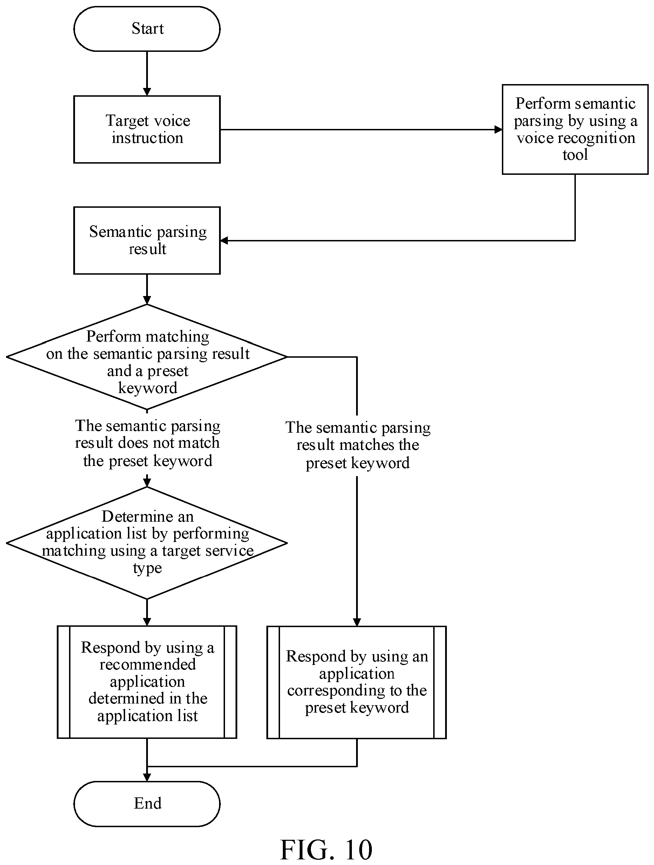

As shown in FIG. 10, after receiving the target voice instruction, the multimedia system may invoke the voice recognition tool to perform semantic parsing on the target voice instruction, to acquire the semantic parsing result. Then, matching is performed on the semantic parsing result and the preset keyword. If the semantic parsing result matches the preset keyword, the application corresponding to the preset keyword is used to respond to the target voice instruction. If the semantic parsing result does not match the preset keyword, content of the service field in the semantic parsing result is determined as the target service type, then the application list corresponding to the target service type is acquired, the recommended application is determined from the application list, and the recommended application is used to respond to the target voice instruction, so that a response process of the target voice instruction meets the user preference, can improve the user experience, and further improve the user retention rate.

In this embodiment, when the semantic parsing result matches the preset keyword, the user preference can be intuitively reflected. Therefore, the application corresponding to the preset keyword may be used to respond to the target voice instruction. This helps improve the user experience, and further improve the user retention rate. When the semantic parsing result does not match the preset keyword, the recommended application is determined from the application list corresponding to the target service type, and the recommended application is used to respond to the target voice instruction. This can meet the user preference to a certain extent, improve the user experience, and further improve the user retention rate.

In an embodiment, the application list includes the at least one candidate application corresponding to the same target service type.

Step S104, to be specific, that a recommended application is determined from the application list by using a first recommendation policy includes: The recommended application is determined from the at least one candidate application by using the first recommendation policy.

The application list is a list formed by the at least one candidate application. The candidate application is an application that can display the content corresponding to the target service type. In this example, the application list includes the at least one candidate application corresponding to the same target service type.

In an example, after determining the application list corresponding to the target service type based on the semantic parsing result, the multimedia system may determine the at least one candidate application from the application list, then execute the preset first recommendation policy to analyze the at least one candidate application, screen out a recommended application that best meets the user preference from the at least one candidate application, and determine the recommended application as the recommended application, to respond to the target voice instruction by using the recommended application, so that the user can browse content of interest by using the recommended application, and therefore the user retention rate is improved.

In this embodiment, the application list corresponding to the target service type includes the at least one candidate application corresponding to the same target service type. The candidate application is an application that meets a basic user requirement (that is, the target service type) extracted from the semantic parsing result. Then, the recommended application that best meets the user preference is screened out from the at least one candidate application, so that when the recommended application is used to respond to the target voice instruction, the user preference is better complied with, to improve the user retention rate.

In an embodiment, as shown in FIG. 2, step S104, to be specific, that a recommended application is determined from the application list by using a first recommendation policy includes the following steps.

S201: A foreground application is determined as the recommended application if the application list includes the foreground application.

S202: A background application is determined as the recommended application if the application list does not include the foreground application and the application list includes the background application.

S203: If the application list does not include the foreground application and the background application and the application list includes a recently used application, the recommended application is determined by analyzing the recently used application by using a second recommendation policy.

S204: A preset application is determined as the recommended application if the application list does not include the foreground application, the background application, and the recently used application.

The recently used application is an application that has been used in a preset period before a current moment.

The foreground application is an application running in the foreground at the current moment, in other words, an application that is running and that is visible to the user. The background application is an application running in the background at the current moment, in other words, an application that can continue to slightly run a related service after the application is closed. The recently used application is an application that has been used in the preset period before the current moment. The preset period is a user-defined period, and may be one day or one week. The preset application is an application that is set by default other than the foreground application, the background application, and the recently used application, and may be a system-provided application.

In an example, in step S201, after acquiring the application list, the multimedia system needs to determine whether the application list includes the foreground application. If the application list includes the foreground application, it indicates that a candidate application is running in the foreground at the current moment, and the user is browsing the foreground application. This may reflect that the user prefers the foreground application. Therefore, the foreground application may be determined as the recommended application. In this way, a recommended application with a highest user preference degree is acquired.

In an example, in step S202, when the application list does not include the foreground application, the multimedia system determines whether the application list includes the background application. If the application list includes the background application, it indicates that although no candidate application is running in the foreground at the current moment, a candidate application is running in the background at the current moment. The background application may be understood as an application opened before the current moment and not completely closed. This may also reflect that the user prefers the background application to a certain extent. Therefore, the background application may be determined as the recommended application. In this way, a recommended application with a high user preference degree is acquired.

The second recommendation policy is a preset policy used to analyze the recently used application to determine the recommended application.

In an example, in step S203, when the application list does not include the foreground application and the background application, the multimedia system determines whether the application list includes the recently used application. If the application list includes the recently used application, it indicates that although no candidate application is running in the foreground and the background at the current moment, the recently used application runs before the current moment and a running record is buffered. This may reflect that the user has browsed the recently used application and prefers the recently used application. Therefore, the second recommendation policy is used to analyze the recently used application, to determine the recommended application. In this way, a recommended application with a common user preference degree is acquired. In this example, the second recommendation policy is used to analyze the recently used application, and a recently used application that meets a preset condition may be determined as the recommended application. The preset condition herein is a condition that is set in advance, and may be determined based on the user preference.

In an example, in step S204, when the application list does not include the foreground application, the background application, and the recently used application, the multimedia system may determine, as the recommended application, the preset application that is set by the system by default. The preset application is any one of the candidate application, and corresponds to the target service type. In this way, a recommended application that meets the basic user requirement is acquired.

As shown in FIG. 10, the multimedia system first determines whether the application list includes the foreground application. If the foreground application is included, the foreground application is used as the recommended application to respond to the target voice instruction. If the foreground application is not included, whether the application list includes the background application is then determined. If the background application is included, the background application is used as the recommended application to respond to the target voice instruction. If the background application is not included, whether the application list includes the recently used application is determined. If the recently used application is included, the recommended application needs to be further determined by using the second recommendation policy. If the recently used application is not included, the preset application is determined as the recommended application to respond to the target voice instruction.

In this embodiment, selection is performed sequentially from the foreground application, the background application, the recently used application, and the preset application in descending order of user preference degrees, to determine the recommended application, so that using the recommended application to respond to the target voice instruction better complies with the user preference, and further improves the user retention rate.

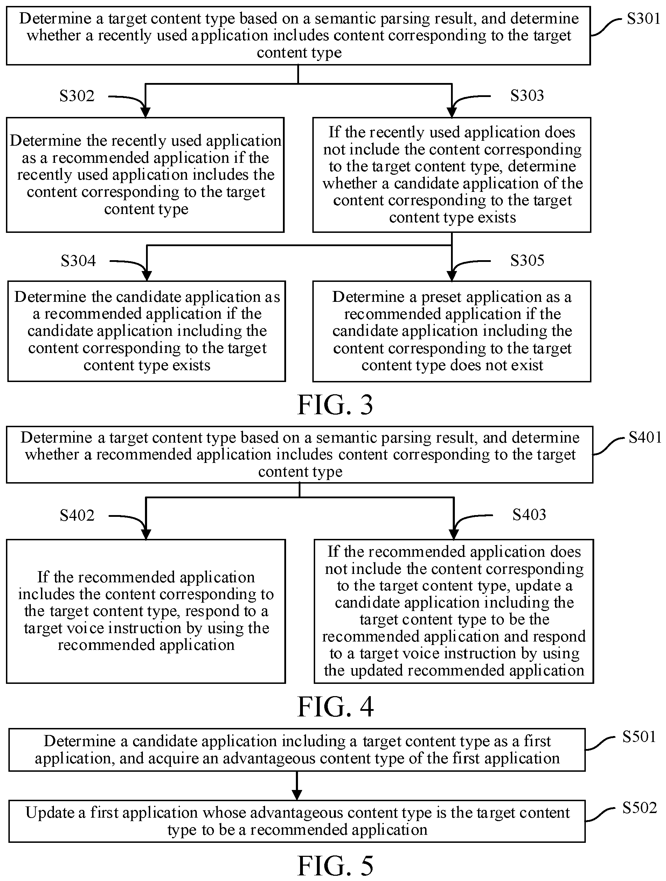

In an embodiment, as shown in FIG. 3, step S203, to be specific, that the recommended application is determined from the application list by using the second recommendation policy includes the following steps.

S301: A target content type is determined based on the semantic parsing result, and whether the recently used application includes content corresponding to the target content type is determined.

S302: The recently used application is determined as the recommended application if the recently used application includes the content corresponding to the target content type.

S303: If the recently used application does not include the content corresponding to the target content type, whether a candidate application of the content corresponding to the target content type exists is determined.

S304: The candidate application is determined as the recommended application if the candidate application including the content corresponding to the target content type exists.

S305: The preset application is determined as the recommended application if the candidate application including the content corresponding to the target content type does not exist.

The target content type is a content type recognized in the semantic parsing result, in other words, is a content type recognized based on the target voice instruction. The semantic parsing result acquired through parsing by using the voice recognition tool includes not only the target service type corresponding to the service field, but also the target content type corresponding to a semantic field. Target service type analysis may be performed based on the target service type and the target content type. The semantic field is a field used to distinguish between utterances of different sub-categories under the service field, and is used to implement a different content type. For example, the service field internetRadio is further divided into several semantic fields: a program field, a tags field, a category field, and a presenter field. It may be understood that a different utterance of the user in the semantic parsing result indicates a different target content type corresponding to the semantic field in the semantic parsing result. For example, if the semantic parsing result is "listen to comedic radio stations", the category field is filled. For another example, if the semantic parsing result is "listen to crosstalk by XX", the presenter field is filled.

In an example, in step S301, when the multimedia system needs to analyze the recently used application by using the second recommendation policy, the multimedia system needs to first determine the target content type based on the semantic parsing result, and further determine whether the recently used application includes the content corresponding to the target content type, to determine whether the recently used application can meet a user requirement.

In an example, in step S302, when the recently used application includes the content of the target content type in the multimedia system, it indicates that the recently used application can display the content, of the target content type, required by the user. In addition, the recently used application is an application that has been used by the user in the preset period before the current moment, and reflects the user preference to a certain extent. Therefore, the recently used application may be determined as the recommended application, so that subsequently using the recommended application to respond to the target voice instruction better complies with the user preference.

In an example, in step S303, when the recently used application does not include the content of the target content type in the multimedia system, it indicates that the recently used application cannot display the content, of the target content type, required by the user. In this case, whether a candidate application other than the recently used application includes the content of the target content type needs to be determined from the at least one candidate application corresponding to the target service type determined based on the semantic parsing result, to determine the recommended application based on a determining result.

In an example, in step S304, when the candidate application including the content corresponding to the target content type exists in the multimedia system, it indicates that a service type of the candidate application includes the target service type determined based on the semantic parsing result, and the candidate application includes the content of the target content type determined based on the semantic parsing result, so that content that meets the user requirement can be displayed. Therefore, the candidate application may be determined as the recommended application.

In an example, in step S305, when the candidate application including the content corresponding to the target content type does not exist in the multimedia system, it indicates that a candidate application that meets both the target service type and the target content type does not exist. In this case, the preset application may be determined as the recommended application. The preset application is any one of the candidate application, and corresponds to the target service type. In this way, a recommended application that meets the basic user requirement is acquired.

In this embodiment, selection is performed sequentially from the recently used application, the candidate application including the target content type, and the preset application based on whether an application includes the content of the target content type, to determine the recommended application, so that the determined recommended application can meet the user preference to the greatest extent. In this way, using the recommended application to respond to the target voice instruction better complies with the user preference, and further improves the user retention rate.

In an embodiment, as shown in FIG. 4, step S105, to be specific, that the target voice instruction is responded to by using the recommended application includes the following steps.

S401: The target content type is determined based on the semantic parsing result, and whether the recommended application includes the content corresponding to the target content type is determined.

S402: If the recommended application includes the content corresponding to the target content type, the target voice instruction is responded to by using the recommended application.

S403: If the recommended application does not include the content corresponding to the target content type, a candidate application including the target content type is updated to be the recommended application and the target voice instruction is responded to by using the updated recommended application.

The target content type is a content type recognized in the semantic parsing result, in other words, is a content type recognized based on the target voice instruction. The semantic parsing result acquired through parsing by using the voice recognition tool includes not only the target service type corresponding to the service field, but also the target content type corresponding to the semantic field. Target service type analysis may be performed based on the target service type and the target content type. The semantic field is a field used to distinguish between utterances of different sub-categories under the service field, and is used to implement a different content type.

In an example, in step S401, when the multimedia system responds to the target voice instruction by using the recommended application, the multimedia system may first determine the target content type based on the semantic parsing result, and further determine whether the recommended application includes the content of the target content type, to determine whether the recommended application can meet the content, of the target content type, required by the user.

In an example, in step S402, when the recommended application includes the content corresponding to the target content type, the multimedia system considers that the recommended application can display the content required by the user. In addition, the recommended application is an application with a high user preference degree. Therefore, the recommended application may be used to respond to the target voice instruction, to display the content of the target content type, so that the user preference is better met, and the user retention rate is further improved. For example, the target content type determined based on the target voice instruction is "play a song 1". If the recommended application includes the song 1, the recommended application may be used to play the song 1. In this way, when content required by the user is displayed, the recommended application that meets the user preference may be used for display, so that the user preference is better complied with, and the user retention rate is further improved.

In an example, in step S403, when the recommended application does not include the content corresponding to the target content type, the multimedia system considers that the recommended application cannot display the content required by the user. In this way, the multimedia system may update the candidate application including the target content type to be the recommended application, and respond to the target voice instruction by using the updated recommended application, so that the updated recommended application can display the content of the target content type, and the user retention rate is further improved. For example, the target content type determined based on the target voice instruction is "play a song 1". If the recommended application does not include the song 1, a candidate application including the song 1 is determined from the at least one candidate application in the application list, the candidate application includes the song 1 is updated to be the recommended application, and the song 1 is played by using the updated recommended application, so that the updated recommended application displays content required by the user, and the user retention rate is further improved.

In this embodiment, whether the recommended application needs to be updated is determined based on whether the recommended application includes the content of the target content type, to ensure that the recommended application can display the content required by the user, so that when the system responds, the user requirement can be met, and the user retention rate can be further improved.

In an embodiment, as shown in FIG. 5, step S403, to be specific, that a candidate application including the target content type is updated to be the recommended application includes the following steps.

S501: The candidate application including the target content type is determined as a first application, and an advantageous content type of the first application is acquired.

S502: A first application whose advantageous content type is the target content type is updated to be the recommended application.

The first application is a candidate application including the target content type, in other words, the first application is an application that matches both the target service type and the target content type that are determined based on the semantic parsing result. The advantageous content type is a content type with a high user evaluation, and may be understood as a content type with a high user evaluation or frequent user access.

In an example, in step S501, the multimedia system may determine, from the application list, at least one candidate application including the target content type as a first application, so that the first application matches the target service type and the target content type that are determined based on the semantic parsing result, to ensure that the first application can display the content required by the user. In addition, after determining the first application, the multimedia system further needs to acquire an advantageous content type of the first application. For example, the multimedia system may query a preset advantageous content type information table, to determine the advantageous content type of the first application.

In an example, in step S502, after acquiring the advantageous content type of the at least one first application, the multimedia system may perform matching on the advantageous content type and the target content type determined based on the semantic parsing result, and update the first application whose advantageous content type is the target content type to be the recommended application, to use the updated recommended application to respond to the target voice instruction, so as to display the content corresponding to the target content type. Because the target content type is the advantageous content type of the updated recommended application, it indicates that a user evaluation of the target content type is high, and the user is more easily attracted, so that the user retention rate and the user experience are improved.

In this example, if a quantity of first applications whose advantageous content types are the target content type is at least two, user ratings of the at least two first applications for the target content type are acquired, and a first application with a highest user rating is determined as the recommended application, to ensure that the user is more easily attracted when the updated recommended application displays the content of the target content type, and therefore improve the user retention rate and the user experience.

In this embodiment, the at least one candidate application including the target content type is determined as the first application, and the first application whose advantageous content type is the target content type is updated to be the recommended application, so that the user is more easily attracted when the updated recommended application displays the content of the target content type, and therefore the user retention rate and the user experience are improved.

In an embodiment, the semantic parsing result includes the target content type.

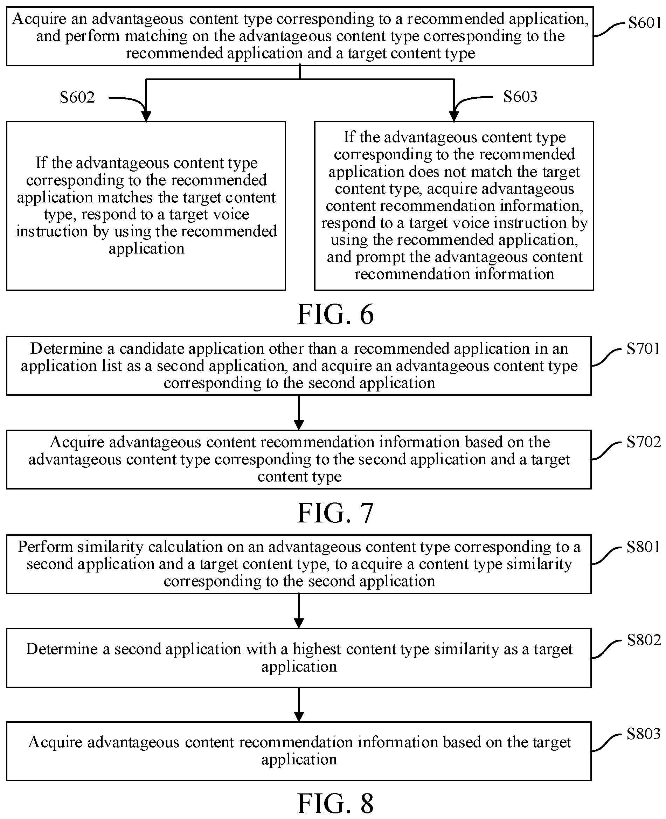

As shown in FIG. 6, step S105, to be specific, that the target voice instruction is responded to by using the recommended application includes the following steps.

S601: An advantageous content type corresponding to the recommended application is acquired, and matching is performed on the advantageous content type corresponding to the recommended application and the target content type.

S602: If the advantageous content type corresponding to the recommended application matches the target content type, the target voice instruction is responded to by using the recommended application.

S603: If the advantageous content type corresponding to the recommended application does not match the target content type, advantageous content recommendation information is acquired, the target voice instruction is responded to by using the recommended application, and the advantageous content recommendation information is prompted.

The target content type is a content type recognized in the semantic parsing result, in other words, is a content type recognized based on the target voice instruction. The semantic parsing result acquired through parsing by using the voice recognition tool includes not only the target service type corresponding to the service field, but also the target content type corresponding to the semantic field. Target service type analysis may be performed based on the target service type and the target content type. The semantic field is a field used to distinguish between utterances of different sub-categories under the service field, and is used to implement a different content type. The advantageous content type is a content type with a high user evaluation, and may be understood as a content type whose user evaluation meets a preset standard.

In an example, in step S601, when the multimedia system responds to the target voice instruction by using the recommended application, and in particular, responds to the target voice instruction by using the recently used application, the multimedia system needs to query an advantageous content type information table preset in the system, and determine the advantageous content type of the recommended application. The advantageous content type may be understood as a high-quality program of the recommended application, for example, a comedy program. In this example, the multimedia system may further perform matching on the advantageous content type of the recommended application and the target content type in the semantic parsing result, to determine, based on an analysis result, content that needs to be displayed in the recommended application.

In an example, in step S602, when the advantageous content type matches the target content type, the multimedia system may determine that the target content type that the user is interested in is the advantageous content type in the recommended application, for example, is the high-quality program in the recommended application. In this way, the multimedia system responds to the target voice instruction by using the recommended application, so that the user is more easily attracted, and the user retention rate is improved.

The advantageous content recommendation information is related information of an application whose advantageous content type is the target content type.

In an example, in step S603, when the advantageous content type does not match the target content type, the multimedia system determines that the target content type that the user is interested in is not the advantageous content type in the recommended application, for example, is not the high-quality program in the recommended application. In this way, the multimedia system may compare an advantageous content type of a candidate application other than the recommended application with the target content type to acquire the advantageous content recommendation information, then respond to the target voice instruction by using the recommended application, and prompt the advantageous content recommendation information. In one aspect, the target voice instruction can be responded to by using the recommended application, so that the user is attracted, and the user retention rate is improved. In another aspect, the user can also be enabled to learn of the advantageous content recommendation information, so as to determine whether an application whose advantageous content type matches the target content type needs to be used to respond to the target voice instruction, and the user retention rate can be further improved.

As shown in FIG. 10, the multimedia system may determine the recently used application as a recommended application APP1, and perform matching on the target content type (content of the semantic field) in the semantic parsing result and an advantageous content type of the recommended application APP1. If the target content type matches the advantageous content type of the recommended application APP1, the recommended application APP1 is used to respond to the target voice instruction. If the target content type does not match the advantageous content type of the recommended application APP1, matching is performed on the target content type (the content of the semantic field) and an advantageous content type of another candidate application in the application list. If there is a candidate application whose advantageous content type matches the target content type, the candidate application is determined as a target application APP2, advantageous content recommendation information (for example, APP2 has a higher-quality program) is generated, the recommended application APP1 is controlled to respond to the target voice instruction, and the advantageous content recommendation information (for example, APP2 has the higher-quality program) is displayed. If there is no candidate application whose advantageous content type matches the target content type, the recommended application APP1 is invoked to respond to the target voice instruction, and advantageous content recommendation information does not need to be prompted.

In the voice control method provided in this embodiment, whether the advantageous content recommendation information needs to be displayed in addition to using the recommended application to respond to the target voice instruction is determined based on a comparison result between the advantageous content type of the recommended application and the target content type of the semantic parsing result, so that the user preference is met, and the user retention rate is improved.

In an embodiment, as shown in FIG. 7, step S603, to be specific, that advantageous content recommendation information is acquired includes the following steps.

S701: A candidate application other than the recommended application in the application list is determined as a second application, and an advantageous content type corresponding to the second application is acquired.

S702: The advantageous content recommendation information is acquired based on the advantageous content type corresponding to the second application and the target content type.

In an example, in step S701, the multimedia system may determine all candidate applications other than the recommended application in the application list as second applications, and then query the advantageous content type information table preset in the system to determine an advantageous content type of the second application.

In an example, in step S702, after acquiring the advantageous content type corresponding to the second application, the multimedia system may analyze and determine, based on the advantageous content type corresponding to the second application and the target content type determined based on the semantic parsing result, a second application corresponding to an advantageous content type that is most similar to the target content type, to form the corresponding advantageous content recommendation information based on the second application with the most similar advantageous content type. The advantageous content recommendation information is used to display information about the advantageous content type, in the second application, that is most similar to the target content type, so that the user is enabled to learn of the advantageous content recommendation information and is reminded whether the second application with the most similar advantageous content type needs to be used to respond to the target voice instruction, and the user retention rate can be further improved.

In this embodiment, when the advantageous content type corresponding to the recommended application does not match the target content type, the candidate application other than the recommended application may be determined as the second application, to avoid repeated calculation. This helps save computational resources and improve processing efficiency. The advantageous content recommendation information is formed based on the target content type and the advantageous content type corresponding to the second application, so that the user is enabled to learn of the advantageous content recommendation information, so as to determine whether the second application with the most similar advantageous content type needs to be used to respond to the target voice instruction, and the user retention rate can be further improved.

In an embodiment, as shown in FIG. 8, step S702, to be specific, that the advantageous content recommendation information is acquired based on the advantageous content type corresponding to the second application and the target content type includes the following steps.

S801: Similarity calculation is performed on the advantageous content type corresponding to the second application and the target content type, to acquire a content type similarity corresponding to the second application.

S802: A second application with a highest content type similarity is determined as a target application.

S803: The advantageous content recommendation information is acquired based on the target application.

In an example, in step S801, after acquiring all the second applications, the multimedia system may perform similarity calculation on advantageous content types corresponding to the second applications and the target content type by using, but not limited to, a cosine similarity algorithm, to acquire a content type similarity of each second application. The content type similarity is used to reflect a similarity between the target content type and the advantageous content type.

In an example, in step S802, after acquiring content type similarities corresponding to all the second applications, the multimedia system may compare all the content type similarities, and determine the second application with the highest content type similarity as the target application. The target application herein may be understood as a candidate application whose advantageous content type is the most similar to the target content type. In other words, the target application meets the basic user requirement corresponding to the target service type, and can ensure that a target content type of the target application is the advantageous content type. This helps improve a user preference degree, and further improve the user retention rate.

In an example, in step S803, after determining the target application, the multimedia system may fill a preset recommendation information template with a program name or another unique identifier corresponding to the target application, to acquire the advantageous content recommendation information, so that the user is enabled to learn of the advantageous content recommendation information, so as to determine whether an application whose advantageous content type matches the target content type needs to be used to respond to the target voice instruction, and the user retention rate can be further improved.

In this embodiment, the second application with the highest content type similarity corresponding to the target content type and the advantageous content type is selected and is determined as the target application, to form the advantageous content recommendation information, so that the basic user requirement corresponding to the target service type can be met, and it can also be ensured that the target content type of the target application is the advantageous content type. This helps improve the user preference degree, and further improve the user retention rate.

In an embodiment, the application list includes at least one candidate application, and each candidate application includes at least one current content type.

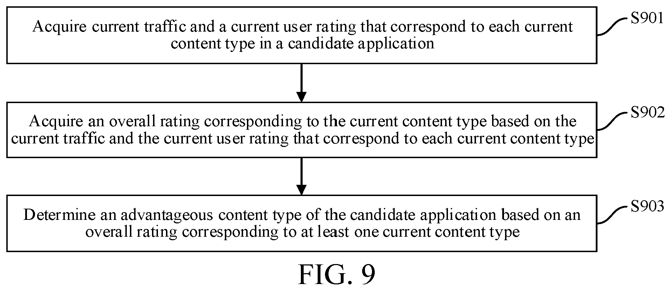

As shown in FIG. 9, before step S105, to be specific, that the target voice instruction is responded to by using the recommended application, the voice control method further includes the following steps.

S901: Current traffic and a current user rating that correspond to each current content type in the candidate application are acquired.

S902: An overall rating corresponding to the current content type is acquired based on the current traffic and the current user rating that correspond to each current content type.

S903: An advantageous content type of the candidate application is determined based on an overall rating corresponding to the at least one current content type.

The candidate application is an application in the application list, and is an application corresponding to the target service type. The current content type is a content type set by the candidate application at the current moment, for example, includes but is not limited to crosstalk, a sketch, or another content type.

In an example, in step S901, the multimedia system may further acquire, through real-time statistics collection, current traffic and a current user rating that correspond to each current content type in each candidate application. The current traffic is traffic in the preset period before the current moment, may reflect a quantity of users that access the current content type in the preset period before the current moment, and may reflect, to a certain extent, a user preference degree for content of the current content type. The current user rating is a rating value at the current moment, or may be limited to a rating value in the preset period before the current moment, and reflects the user preference degree for the content of the current content type.

In an example, in step S902, after acquiring the current traffic and the current user rating that correspond to each current content type, the multimedia system may perform weighting or other calculation on the current traffic and the current user rating, to determine an overall rating corresponding to the current content type. For example, the multimedia system may first perform normalization on the current traffic and the current user rating to respectively acquire a traffic normalization value and a rating normalization value, and then perform weighting with reference to a preset traffic weight and a preset rating weight to acquire the overall rating corresponding to each current content type, so that the overall rating can reflect the user preference degree for the content of the current content type or a positive reception degree for the content of the current content type.

In an example, in step S903, after receiving an overall rating corresponding to at least one current content type, the multimedia system may process the overall rating by using a preset advantage evaluation condition, and determine an advantageous content type of the to-be-processed application from the at least one current content type. For example, the multimedia system may determine, as the advantageous content type of the to-be-processed application, a current content type whose overall rating is greater than a preset rating. The preset rating herein is a preset rating used to evaluate whether an advantageous content type standard is met. For another example, the multimedia system may alternatively determine, as advantageous content types of the to-be-processed application, first N current content types with high overall ratings. N≥1.

In this embodiment, before the recommended application is used to respond to the target voice instruction, the overall rating of each current content type may be determined based on the current traffic and the current user rating that correspond to the current content type, to update an advantageous content type corresponding to each to-be-processed application, so that when the to-be-processed application (including but not limited to the recommended application) is used to respond to the target voice instruction based on the advantageous content type of the to-be-processed application, the user preference is better met. This helps improve the user preference degree, and further improve the user retention rate.

It should be understood that sequence numbers of steps do not mean execution sequences in the foregoing embodiments. Execution sequences of processes should be determined based on functions and internal logic of the processes, and should not constitute any limitation on implementation processes of embodiments of the present disclosure.

In an embodiment, a multimedia system is provided. The multimedia system includes a memory, a processor, and a computer program stored in the memory and running on the processor. The voice control method in the foregoing embodiment, for example, S101 to S105 shown in FIG. 1 or the steps shown in FIG. 2 to FIG. 8, is implemented when the processor executes the computer program. To avoid repetition, details are not described herein again.

In an embodiment, a vehicle is provided. The vehicle includes the multimedia system in the foregoing embodiment. The multimedia system may perform the voice control method in the foregoing embodiment, for example, S101 to S105 shown in FIG. 1 or the steps shown in FIG. 2 to FIG. 8. To avoid repetition, details are not described herein again.

In an embodiment, a computer-readable storage medium is provided. The computer-readable storage medium stores a computer program. The voice control method in the foregoing embodiment, for example, S101 to S105 shown in FIG. 1 or the steps shown in FIG. 2 to FIG. 8, is implemented when the computer program is executed by a processor. To avoid repetition, details are not described herein again.

A person of ordinary skill in the art may understand that all or some of procedures of the method in the foregoing embodiments may be implemented by a computer program instructing related hardware. The computer program may be stored in a non-volatile computer-readable storage medium. When the computer program is executed, the procedures of the foregoing method embodiments may be included. References to the memory, the storage, the database, or another medium used in the embodiments provided in the present disclosure may all include a non-volatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache. By way of description, and not limitation, the RAM may be acquired in multiple forms, such as a static RAM (SRAM), a dynamic RAM (DRAM), a synchronous DRAM (SDRAM), a double data rate SDRAM (DDRSDRAM), an enhanced SDRAM (ESDRAM), a synchlink (Synchlink) DRAM (SLDRAM), a rambus (Rambus) direct RAM (RDRAM), a direct rambus dynamic RAM (DRDRAM), and a rambus dynamic RAM (RDRAM).

A person skilled in the art may clearly understand that, for the purpose of convenient and brief description, division into the foregoing functional units or modules is merely used as an example for description. During actual application, the foregoing functions may be allocated to different functional units or modules for implementation based on a requirement. In other words, an inner structure of the apparatus is divided into different functional units or modules to implement all or some of the functions described above.

The foregoing embodiments are merely intended for describing the technical solutions of the present disclosure, but not for limiting the present disclosure. Although the present disclosure is described in detail with reference to the foregoing embodiments, it should be understood by a person of ordinary skill in the art: Modifications may still be made to the technical solutions described in the foregoing embodiments, or equivalent replacements may still be made to some of the technical features. These modifications or replacements do not cause essence of the corresponding technical solutions to depart from the spirit and scope of the technical solutions of the embodiments of the present disclosure.

## Claims

1. A voice control method, comprising:
performing (S101) semantic parsing on a received target voice instruction, to acquire a semantic parsing result; and
if the semantic parsing result matches a preset keyword, responding (S102) to the target voice instruction by using an application corresponding to the preset keyword; or
if the semantic parsing result does not match a preset keyword, determining (S103) a target service type based on the semantic parsing result and acquiring an application list corresponding to the target service type;
determining (S104) a recommended application from the application list by using a first recommendation policy; and
responding (S105) to the target voice instruction by using the recommended application;
wherein the determining a recommended application from the application list by using a first recommendation policy comprises:
determining (S201) a foreground application as the recommended application if the application list comprises the foreground application;
determining (S202) a background application as the recommended application if the application list does not comprise the foreground application and the application list comprises the background application;
if the application list does not comprise the foreground application and the background application and the application list comprises a recently used application, determining (S203) the recommended application from the application list by using a second recommendation policy; and
application list does not comprise the foreground application, the background application, and the recently used application,
wherein the recently used application is an application that has been used in a preset period before a current moment.

2. The voice control method according to claim 1, wherein the determining the recommended application from the application list by using a second recommendation policy comprises:
determining (S301) a target content type based on the semantic parsing result, and determining whether the recently used application comprises content corresponding to the target content type; and
determining (S302) the recently used application as the recommended application if the recently used application comprises the content corresponding to the target content type; or
if the recently used application does not comprise the content corresponding to the target content type, determining (S303) whether a candidate application of the content corresponding to the target content type exists; and
determining (S304) the candidate application as the recommended application if the candidate application comprising the content corresponding to the target content type exists; or
determining (S305) the preset application as the recommended application if the candidate application comprising the content corresponding to the target content type does not exist.

3. The voice control method according to any one of claims 1 to 2, wherein the responding to the target voice instruction by using the recommended application comprises:
determining (S401) the target content type based on the semantic parsing result, and determining whether the recommended application comprises the content corresponding to the target content type; and
if the recommended application comprises the content corresponding to the target content type, responding (S402) to the target voice instruction by using the recommended application; or
if the recommended application does not comprise the content corresponding to the target content type, updating (S403) a candidate application comprising the target content type to be the recommended application and responding to the target voice instruction by using the updated recommended application.

4. The voice control method according to claim 3, wherein the updating a candidate application comprising the target content type to be the recommended application comprises:
determining (S501) the candidate application comprising the target content type as a first application, and acquiring an advantageous content type of the first application; and
updating (S502) a first application whose advantageous content type is the target content type to be the recommended application.

5. The voice control method according to any one of claims 1 to 2, wherein the semantic parsing result comprises the target content type; and
the responding to the target voice instruction by using the recommended application comprises:
acquiring an advantageous content type corresponding to the recommended application,
and performing matching on the advantageous content type corresponding to the recommended application and the target content type; and
if the advantageous content type corresponding to the recommended application matches the target content type, responding (S602) to the target voice instruction by using the recommended application; or
if the advantageous content type corresponding to the recommended application does not match the target content type, acquiring (S603) advantageous content recommendation information, responding to the target voice instruction by using the recommended application, and prompting the advantageous content recommendation information.

6. The voice control method according to claim 5, wherein the acquiring advantageous content recommendation information comprises:
determining (S701) a candidate application other than the recommended application in the application list as a second application, and acquiring an advantageous content type corresponding to the second application; and
acquiring (S702) the advantageous content recommendation information based on the advantageous content type corresponding to the second application and the target content type.

7. The voice control method according to claim 6, wherein the acquiring the advantageous content recommendation information based on the advantageous content type corresponding to the second application and the target content type comprises:
performing (S801) similarity calculation on the advantageous content type corresponding to the second application and the target content type, to acquire a content type similarity corresponding to the second application;
determining (S802) a second application with a highest content type similarity as a target application; and
acquiring the advantageous content recommendation information based on the target application.

8. The voice control method according to any one of claims 5 to 7, the application list comprising at least one candidate application, and each candidate application comprising at least one current content type; and
before the responding to the target voice instruction by using the recommended application, the voice control method further comprising:
acquiring (S901) current traffic and a current user rating that correspond to each current content type in the candidate application;
acquiring (S902), based on the current traffic and the current user rating that correspond to each current content type, an overall rating corresponding to the current content type; and
determining (S903) an advantageous content type of the candidate application based on an overall rating corresponding to the at least one current content type.

9. A multimedia system, comprising a memory, a processor, and a computer program stored in the memory which, when executed by the processor, cause the processor to carry out the voice control method according to any one of claims 1 to 8.

10. A vehicle, comprising the multimedia system according to claim 9.

11. A computer-readable storage medium, storing a computer program comprising instructions which, when executed by a computer, cause the computer to carry out the voice control method according to any one of claims 1 to 8.

## Patentansprüche

1. Sprachsteuerungsverfahren, umfassend:
Durchführen (S101) von semantischem Parsing an einer empfangenen Zielsprachanweisung, um ein Ergebnis des semantischen Parsings zu erfassen; und
wenn das Ergebnis des semantischen Parsings mit einem voreingestellten Schlüsselwort übereinstimmt, Reagieren (S102) auf die Zielsprachanweisung durch Verwenden einer Anwendung, die dem voreingestellten Schlüsselwort entspricht; oder
wenn das Ergebnis des semantischen Parsings nicht mit einem voreingestellten Schlüsselwort übereinstimmt, Bestimmen (S103) einer Zieldienstart basierend auf dem Ergebnis des semantischen Parsings und Erfassen einer Anwendungsliste, die der Zieldienstart entspricht;
Bestimmen (S104) einer empfohlenen Anwendung aus der Anwendungsliste durch Verwenden einer ersten Empfehlungsrichtlinie; und
Reagieren (S105) auf die Zielsprachanweisung durch Verwenden der empfohlenen Anwendung;
wobei das Bestimmen einer empfohlenen Anwendung aus der Anwendungsliste durch Verwenden einer ersten Empfehlungsrichtlinie Folgendes umfasst:
Bestimmen (S201) einer Vordergrundanwendung als die empfohlene Anwendung, wenn die Anwendungsliste die Vordergrundanwendung umfasst;
Bestimmen (S202) einer Hintergrundanwendung als die empfohlene Anwendung, wenn die Anwendungsliste nicht die Vordergrundanwendung umfasst und die Anwendungsliste die Hintergrundanwendung umfasst;
wenn die Anwendungsliste nicht die Vordergrundanwendung und die Hintergrundanwendung umfasst und die Anwendungsliste eine kürzlich verwendete Anwendung umfasst, Bestimmen (S203) der empfohlenen Anwendung aus der Anwendungsliste durch Verwenden einer zweiten Empfehlungsrichtlinie; und
die Anwendungsliste umfasst nicht die Vordergrundanwendung, die Hintergrundanwendung und die kürzlich verwendete Anwendung,
wobei die kürzlich verwendete Anwendung eine Anwendung ist, die in einem voreingestellten Zeitraum vor einem aktuellen Moment verwendet worden ist.

2. Sprachsteuerungsverfahren nach Anspruch 1, wobei das Bestimmen der empfohlenen Anwendung aus der Anwendungsliste durch Verwenden einer zweiten Empfehlungsrichtlinie Folgendes umfasst:
Bestimmen (S301) einer Zielinhaltstart basierend auf dem Ergebnis des semantischen Parsings und Bestimmen, ob die kürzlich verwendete Anwendung Inhalt umfasst, der der Zielinhaltsart entspricht; und
Bestimmen (S302) der kürzlich verwendeten Anwendung als die empfohlene Anwendung, wenn die kürzlich verwendete Anwendung den Inhalt umfasst, der der Zielinhaltsart entspricht; oder
wenn die kürzlich verwendete Anwendung nicht den Inhalt umfasst, der der Zielinhaltsart entspricht, Bestimmen (S303), ob eine Kandidatenanwendung des Inhalts, der der Zielinhaltsart entspricht, vorhanden ist; und
Bestimmen (S304) der Kandidatenanwendung als die empfohlene Anwendung, wenn die Kandidatenanwendung, die den Inhalt umfasst, der der Zielinhaltsart entspricht, vorhanden ist; oder
Bestimmen (S305) der voreingestellten Anwendung als die empfohlene Anwendung, wenn die Kandidatenanwendung, die den Inhalt umfasst, der der Zielinhaltsart entspricht, nicht vorhanden ist.

3. Sprachsteuerungsverfahren nach einem der Ansprüche 1 bis 2, wobei das Reagieren auf die Zielsprachanweisung durch Verwenden der empfohlenen Anwendung Folgendes umfasst:
Bestimmen (S401) der Zielinhaltsart basierend auf dem Ergebnis des semantischen Parsings, und Bestimmen, ob die empfohlene Anwendung den Inhalt umfasst, der der Zielinhaltsart entspricht; und
wenn die empfohlene Anwendung den Inhalt umfasst, der der Zielinhaltsart entspricht, Reagieren (S402) auf die Zielsprachanweisung durch Verwenden der empfohlenen Anwendung; oder
wenn die empfohlene Anwendung nicht den Inhalt umfasst, der der Zielinhaltsart entspricht, Aktualisieren (S403) einer Kandidatenanwendung, die die Zielinhaltsart umfasst, derart, dass sie die empfohlene Anwendung ist, und Reagieren auf die Zielsprachanweisung durch Verwenden der aktualisierten empfohlenen Anwendung.

4. Sprachsteuerungsverfahren nach Anspruch 3, wobei das Aktualisieren einer Kandidatenanwendung, die die Zielinhaltsart umfasst, derart, dass sie die empfohlene Anwendung ist, Folgendes umfasst:
Bestimmen (S501) der Kandidatenanwendung, die die Zielinhaltsart umfasst, als eine erste Anwendung und Erfassen einer vorteilhaften Inhaltsart der ersten Anwendung; und
Aktualisieren (S502) einer ersten Anwendung, deren vorteilhafte Inhaltsart die Zielinhaltsart ist, die die empfohlene Anwendung sein soll.

5. Sprachsteuerungsverfahren nach einem der Ansprüche 1 bis 2, wobei das Ergebnis des semantischen Parsings die Zielinhaltsart umfasst; und
das Reagieren auf die Zielsprachanweisung durch Verwenden der empfohlenen Anwendung Folgendes umfasst:
Erfassen einer vorteilhaften Inhaltsart, die der empfohlenen Anwendung entspricht,
und Durchführen des Abgleichs mit der vorteilhaften Inhaltsart, die der empfohlenen Anwendung entspricht, und der Zielinhaltsart; und
wenn die vorteilhafte Inhaltsart, die der empfohlenen Anwendung entspricht, mit der Zielinhaltsart übereinstimmt, Reagieren (S602) auf die Zielsprachanweisung durch Verwenden der empfohlenen Anwendung; oder
wenn die vorteilhafte Inhaltsart, die der empfohlenen Anwendung entspricht, nicht mit der Zielinhaltsart übereinstimmt, Erfassen (S603) von vorteilhaften Inhaltsempfehlungsinformationen, Reagieren auf die Zielsprachanweisung durch Verwenden der empfohlenen Anwendung und Prompten der vorteilhaften Inhaltsempfehlungsinformationen.

6. Sprachsteuerungsverfahren nach Anspruch 5, wobei das Erfassen von vorteilhaften Inhaltsempfehlungsinformationen Folgendes umfasst:
Bestimmen (S701) einer anderen Kandidatenanwendung als der empfohlenen Anwendung in der Anwendungsliste als eine zweite Anwendung und Erfassen einer vorteilhaften Inhaltsart, die der zweiten Anwendung entspricht; und
Erfassen (S702) der vorteilhaften Inhaltsempfehlungsinformationen basierend auf der vorteilhaften Inhaltsart, die der zweiten Anwendung entspricht, und der Zielinhaltsart.

7. Sprachsteuerungsverfahren nach Anspruch 6, wobei das Erfassen der vorteilhaften Inhaltsempfehlungsinformationen basierend auf der vorteilhaften Inhaltsart, die der zweiten Anwendung entspricht, und der Zielinhaltsart Folgendes umfasst:
Durchführen (S801) einer Ähnlichkeitsberechnung an der vorteilhaften Inhaltsart, die der zweiten Anwendung entspricht, und der Zielinhaltsart, um eine Inhaltsartenähnlichkeit, die der zweiten Anwendung entspricht, zu erfassen;
Bestimmen (S802) einer zweiten Anwendung mit einer höchsten höchsten Inhaltsartenähnlichkeit als eine Zielanwendung; und Erfassen der vorteilhaften Inhaltsempfehlungsinformationen basierend auf der Zielanwendung.

8. Sprachsteuerungsverfahren nach einem der Ansprüche 5 bis 7, wobei die Anwendungsliste mindestens eine Kandidatenanwendung umfasst und jede Kandidatenanwendung mindestens eine aktuelle Inhaltsart umfasst; und
vor dem Reagieren auf die Zielsprachanweisung durch Verwenden der empfohlenen Anwendung das Sprachsteuerungsverfahren ferner Folgendes umfasst:
Erfassen (S901) des aktuellen Datenverkehrs und einer aktuellen Benutzerbewertung, die jeder aktuellen Inhaltsart in der Kandidatenanwendung entsprechen;
Erfassen (S902), basierend auf dem aktuellen Verkehr und der aktuellen Benutzerbewertung, die jeder aktuellen Inhaltsart entsprechen, einer Gesamtbewertung, die der aktuellen Inhaltsart entspricht; und
Bestimmen (S903) einer vorteilhaften Inhaltsart der Kandidatenanwendung basierend auf einer Gesamtbewertung, die der mindestens einen aktuellen Inhaltsart entspricht.

9. Multimediasystem, umfassend einen Speicher, einen Prozessor und ein in dem Speicher gespeichertes Computerprogramm, das, wenn es durch den Prozessor ausgeführt wird, bewirkt, dass der Prozessor das Sprachsteuerungsverfahren nach einem der Ansprüche 1 bis 8 realisiert.

10. Fahrzeug, umfassend das Multimediasystem nach Anspruch 9.

11. Computerlesbares Speichermedium, das ein Computerprogramm speichert, das Anweisungen umfasst, die, wenn sie durch einen Computer ausgeführt werden, bewirken, dass der Computer das Sprachsteuerungsverfahren nach einem der Ansprüche 1 bis 8 realisiert.

## Revendications

1. Procédé de commande vocale, comprenant :
la réalisation (S101) d'une analyse sémantique sur une instruction vocale cible reçue, pour acquérir un résultat d'analyse sémantique ; et
si le résultat de l'analyse sémantique concorde à un mot-clé prédéfini, la réponse (S102) à l'instruction vocale cible en utilisant une application correspondant au mot-clé prédéfini ; ou
si le résultat d'analyse sémantique ne concorde pas à un mot-clé prédéfini, la détermination (S103) d'un type de service cible sur la base du résultat d'analyse sémantique et l'acquisition d'une liste d'applications correspondant au type de service cible ;
la détermination (S104) d'une application recommandée à partir de la liste d'applications en utilisant une première politique de recommandation ; et
la réponse (S105) à l'instruction vocale cible en utilisant l'application recommandée ;
dans lequel la détermination d'une application recommandée à partir de la liste d'applications à l'aide d'une première politique de recommandation comprend :
la détermination (S201) d'une application de premier plan en tant qu'application recommandée si la liste d'applications comprend l'application de premier plan ;
la détermination (S202) d'une application d'arrière-plan en tant qu'application recommandée si la liste d'applications ne comprend pas l'application de premier plan et la liste d'applications comprend l'application d'arrière-plan ;
si la liste d'applications ne comprend pas l'application de premier plan ni l'application d'arrière-plan et que la liste d'applications comprend une application récemment utilisée, la détermination (S203) de l'application recommandée à partir de la liste d'applications en utilisant une seconde politique de recommandation ; et
la liste des applications ne comprend pas l'application de premier plan, l'application d'arrière-plan ni l'application récemment utilisée,
dans lequel l'application récemment utilisée est une application qui a été utilisée dans une période prédéfinie avant un moment actuel.

2. Procédé de commande vocale selon la revendication 1, dans lequel la détermination de l'application recommandée à partir de la liste d'applications en utilisant une seconde politique de recommandation comprend :
la détermination (S301) d'un type de contenu cible sur la base du résultat d'analyse sémantique, et le fait de déterminer si l'application récemment utilisée comprend un contenu correspondant au type de contenu cible ; et
la détermination (S302) de l'application récemment utilisée en tant qu'application recommandée si l'application récemment utilisée comprend le contenu correspondant au type de contenu cible ; ou
si l'application récemment utilisée ne comprend pas le contenu correspondant au type de contenu cible, le fait de déterminer (S303) s'il existe une application candidate du contenu correspondant au type de contenu cible ; et
la détermination (S304) de l'application candidate en tant qu'application recommandée si l'application candidate comprenant le contenu correspondant au type de contenu cible existe ; ou
la détermination (S305) de l'application prédéfinie en tant qu'application recommandée si l'application candidate comprenant le contenu correspondant au type de contenu cible n'existe pas.

3. Procédé de commande vocale selon l'une quelconque des revendications 1 à 2, dans lequel la réponse à l'instruction vocale cible en utilisant l'application recommandée comprend :
la détermination (S401) du type de contenu cible sur la base du résultat d'analyse sémantique, et le fait de déterminer si l'application recommandée comprend le contenu correspondant au type de contenu cible ; et
si l'application recommandée comprend le contenu correspondant au type de contenu cible, la réponse (S402) à l'instruction vocale cible en utilisant l'application recommandée ; ou
si l'application recommandée ne comprend pas le contenu correspondant au type de contenu cible, la mise à jour (S403) d'une application candidate comprenant le type de contenu cible pour qu'elle soit l'application recommandée et la réponse à l'instruction vocale cible en utilisant l'application recommandée mise à jour.

4. Procédé de commande vocale selon la revendication 3, dans lequel la mise à jour d'une application candidate comprenant le type de contenu cible pour qu'elle soit l'application recommandée comprend :
la détermination (S501) de l'application candidate comprenant le type de contenu cible en tant que première application, et l'acquisition d'un type de contenu avantageux de la première application ; et
la mise à jour (S502) d'une première application dont le type de contenu avantageux est le type de contenu cible pour qu'elle soit l'application recommandée.

5. Procédé de commande vocale selon l'une quelconque des revendications 1 à 2, dans lequel
le résultat d'analyse sémantique comprend le type de contenu cible ; et
la réponse à l'instruction vocale cible en utilisant l'application recommandée comprend :
l'acquisition d'un type de contenu avantageux correspondant à l'application recommandée,
et la réalisation d'une concordance sur le type de contenu avantageux correspondant à l'application recommandée et sur le type de contenu cible ; et
si le type de contenu avantageux correspondant à l'application recommandée concorde au type de contenu cible, la réponse (S602) à l'instruction vocale cible en utilisant l'application recommandée ; ou
si le type de contenu avantageux correspondant à l'application recommandée ne concorde pas au type de contenu cible, l'acquisition (S603) d'informations de recommandation de contenu avantageux, la réponse à l'instruction vocale cible en utilisant l'application recommandée, et la soumission des informations de recommandation de contenu avantageux.

6. Procédé de commande vocale selon la revendication 5, dans lequel l'acquisition d'informations de recommandation de contenu avantageux comprend :
la détermination (S701) d'une application candidate autre que l'application recommandée dans la liste d'applications en tant que seconde application, et l'acquisition d'un type de contenu avantageux correspondant à la seconde application ; et
l'acquisition (S702) des informations de recommandation de contenu avantageux sur la base du type de contenu avantageux correspondant à la seconde application et du type de contenu cible.

7. Procédé de commande vocale selon la revendication 6, dans lequel l'acquisition des informations de recommandation de contenu avantageux sur la base du type de contenu avantageux correspondant à la seconde application et du type de contenu cible comprend :
la réalisation (S801) d'un calcul de similarité sur le type de contenu avantageux correspondant à la seconde application et sur le type de contenu cible, pour acquérir une similarité de type de contenu correspondant à la seconde application ;
la détermination (S802) d'une seconde application avec une similarité de type de contenu la plus élevée en tant qu'application cible ; et
l'acquisition des informations de recommandation de contenu avantageux sur la base de l'application cible.

8. Procédé de commande vocale selon l'une quelconque des revendications 5 à 7, la liste d'applications comprenant au moins une application candidate, et chaque application candidate comprenant au moins un type de contenu actuel ; et
avant la réponse à l'instruction vocale cible en utilisant l'application recommandée, le procédé de commande vocale comprenant en outre :
l'acquisition (S901) de trafic actuel et d'une note d'utilisateur actuelle qui correspondent à chaque type de contenu actuel dans l'application candidate ;
l'acquisition (S902), sur la base du trafic actuel et de la note actuelle de l'utilisateur qui correspondent à chaque type de contenu actuel, d'une note globale correspondant au type de contenu actuel ; et
la détermination (S903) d'un type de contenu avantageux de l'application candidate sur la base d'une évaluation globale correspondant à l'au moins un type de contenu actuel.

9. Système multimédia, comprenant une mémoire, un processeur et un programme informatique stocké dans la mémoire qui, lorsqu'il est exécuté par le processeur, amène le processeur à effectuer le procédé de commande vocale selon l'une quelconque des revendications 1 à 8.

10. Véhicule, comprenant le système multimédia selon la revendication 9.

11. Support de stockage lisible par ordinateur, stockant un programme informatique comprenant des instructions qui, lorsqu'elles sont exécutées par un processeur, amènent l'ordinateur à effectuer le procédé de commande vocale selon l'une quelconque des revendications 1 à 8.
